# EUROPEAN PATENT APPLICATION

(11) **EP 4 550 094 A1**
(43) Date of publication of application: **07.05.2025**
(21) Application number: 24207888.9
(22) Date of filing: 21.10.2024
(51) Int. Cl.: G06F 3/01, A63F 13/75, A63F 13/79, A63F 13/87, G06T 13/40

(54) **CONTROLLING AVATAR REPRESENTATION IN AN EXTENDED REALITY ENVIRONMENT**

(30) Priority: 31.10.2023 GB 202316631
(71) Applicant: Sony Interactive Entertainment Europe Limited, London W1F 7LP (GB)
(72) Inventor: LEYTON, Pedro Federico Quijada, c/o Sony Interactive Entertainment Europe Limited, London, W1F 7LP (GB); KEYS, Owen Bruce, c/o Sony Interactive Entertainment Europe Limited, London, W1F 7LP (GB); SANDERS, Ashley John, c/o Sony Interactive Entertainment Europe Limited, London, W1F 7LP (GB); VISCIGLIA, Aron Giuseppe, c/o Sony Interactive Entertainment Europe Limited, London, W1F 7LP (GB); UBERTI, David Erwan Damien, c/o Sony Interactive Entertainment Europe Limited, London, W1F 7LP (GB)
(74) Representative: Murgitroyd & Company

(57) **Abstract**

A computer-implemented method, comprising obtaining at least one visual setting and/or at least one aural setting of an extended reality environment, obtaining a visual parameter and/or an aural parameter of a virtual avatar, wherein the virtual avatar is within the extended reality environment or has requested entry to the extended reality environment, comparing the visual parameter of the virtual avatar to the at least one visual setting of the extended reality environment, and/or comparing the aural parameter of the virtual avatar to the at least one aural setting of the extended reality environment, and based on the comparison, adjusting the visual parameter and/or the aural parameter of the virtual avatar. The virtual avatar may be adjusted within a user-specified range of permitted values for the parameter.

## Description

### TECHNICAL FIELD

The present specification relates to computer-implemented methods for controlling visual and/or aural representation of a virtual avatar in an extended reality environment.

### BACKGROUND

An extended reality (or XR) environment may be a virtual reality (VR) environment, or an augmented reality (AR) environment, or a mixed-reality (MR) environment. Thus, the environment may be completely computer-generated or digital, or it may be only partially computer-generated, such that the environment includes real-world elements.

A user is often represented in an XR environment by a virtual avatar. A virtual avatar is a graphical representation of a user, or a user's chosen character, on a digital platform. A virtual avatar can have a two-dimensional form (e.g. an image or icon) or a three-dimensional form (e.g. a character in a 3D computer game).

The use of a virtual avatar rather than an image or video of the user can allow a user to maintain some anonymity in the digital world.

### SUMMARY

Aspects of the present disclosure are set out in the accompanying independent and dependent claims. Combinations of features from the dependent claims may be combined with features of the independent claims as appropriate and not merely as explicitly set out in the claims.

According to a first aspect of the present disclosure, there is provided a computer-implemented method, comprising obtaining at least one visual setting and/or at least one aural setting of an extended reality environment, obtaining a visual parameter and/or an aural parameter of a virtual avatar, wherein the virtual avatar is within the extended reality environment or has requested entry to the extended reality environment, comparing the visual parameter of the virtual avatar to the at least one visual setting of the extended reality environment, and/or comparing the aural parameter of the virtual avatar to the at least one aural setting of the extended reality environment, and based on the comparison, adjusting the visual parameter and/or the aural parameter of the virtual avatar.

The present disclosure therefore provides a computer-implemented method that improves the representation of a virtual avatar, or improves control over representation of virtual avatars, in an extended reality (XR) environment.

Throughout the present disclosure the term avatar and virtual avatar may be used interchangeably. The virtual avatar may be two-dimensional or three-dimensional.

The virtual avatar may be associated with a user. The user may be referred to as an individual, a person, or a real-world user.

Optionally, the extended reality environment may be an augmented reality (AR) environment.

Optionally, the extended reality environment may be a virtual reality (VR) environment.

Optionally, obtaining at least one visual setting and/or at least one aural setting of the extended reality environment may comprise determining at least one visual setting and/or at least one aural setting of the extended reality environment. Optionally, the setting may be referred to as a property.

Optionally, obtaining at least one visual setting and/or at least one aural setting of the extended reality environment may comprise retrieving (e.g. from a processor, user input device, or other resource) at least one visual setting and/or at least one aural setting of the extended reality environment.

Optionally, adjusting the visual parameter and/or the aural parameter of the virtual avatar mitigates potential visual conflict and/or aural conflict between the virtual avatar and the extended reality environment.

Adjusting the visual parameter and/or the aural parameter of the virtual avatar may therefore comprise managing potential visual and/or aural conflict between the virtual avatar and the extended reality environment by adjusting the visual parameter and/or the aural parameter accordingly.

Optionally, adjusting the visual parameter and/or the aural parameter of the virtual avatar increases or improves a contrast between the extended reality environment and the virtual avatar.

Adjusting the visual parameter and/or the aural parameter of the virtual avatar may therefore comprise managing or optimising a level of contrast (i.e., visual and/or aural contrast) between the extended reality environment and the virtual avatar by adjusting the visual parameter and/or the aural parameter accordingly.

Adjusting the visual parameter and/or the aural parameter of the virtual avatar may comprise conforming the virtual avatar to one or more constraints of the extended reality environment. The one or more constraints may be defined by the at least one obtained visual and/or aural setting.

Optionally, the method includes determining a number of virtual avatars within the extended reality environment and/or a number of virtual avatars that have requested entry to the extended reality environment.

Adjusting the visual parameter and/or the aural parameter of the virtual avatar may be at least partially based on the determined number of virtual avatars within or requesting entry to the extended reality environment.

Optionally, the method includes obtaining a visual parameter and/or an aural parameter of at least one other virtual avatar, wherein the at least one other virtual avatar is within the extended reality environment or has requested entry to the extended reality environment.

Adjusting the visual parameter and/or the aural parameter of the virtual avatar may be at least partially based on the visual parameter and/or an aural parameter of at least one other virtual avatar.

Optionally, obtaining the visual parameter comprises obtaining a specified range of permitted values for the visual parameter. Optionally, the specified range of permitted values is a user-specified range of permitted values.

Optionally, obtaining the aural parameter comprises obtaining a specified range of permitted values for the aural parameter. Optionally, the specified range of permitted values is a user-specified range of permitted values.

Adjusting the visual parameter of the virtual avatar may comprise adjusting the visual parameter of the virtual avatar within the specified range of permitted values.

Adjusting the aural parameter of the virtual avatar may comprise adjusting the aural parameter of the virtual avatar within the specified range of permitted values.

Optionally, the at least one visual setting of the extended reality environment comprises one or more of the following: at least one colour, or colour range, or colour theme or background colour of the environment; a frame rate or refresh rate; a size, or a scale or a dimension.

Optionally, the at least one aural setting of the extended reality environment comprises one or more of the following: a pitch, and/or volume and/or other aural property of a background music track; a maximum and/or a minimum avatar vocal volume; a maximum and/or a minimum avatar vocal pitch; a pitch, and/or volume and/or other aural property of one or more non-player characters.

Optionally, the visual parameter of the virtual avatar comprises any one or more of: a size, or a scale or a dimension of the virtual avatar; a colour; a blinking frequency; a pre-set visual emotional response.

Optionally, the aural parameter of the virtual avatar comprises any one or more of: vocal pitch; vocal volume; a pre-set aural emotional response.

Optionally, the at least one aural setting of the extended reality environment comprises a maximum volume setting and the aural parameter of the virtual avatar includes a vocal volume of the virtual avatar. In response to the vocal volume of the virtual avatar exceeding the maximum volume setting of the extended reality environment, adjusting the aural parameter may comprise reducing the vocal volume of the virtual avatar to below the maximum volume setting, or muting the virtual avatar until the vocal volume of the virtual avatar is below the maximum volume setting.

Optionally, the adjustment to the visual parameter and/or the aural parameter of the virtual avatar is applied to each instance of the extended reality environment. Thus, the adjustment to the visual parameter and/or the aural parameter of the virtual avatar may be detectable throughout the extended reality environment by all users in the extended reality environment.

Optionally, prior to adjusting the visual parameter and/or the aural parameter of the virtual avatar, the method comprises outputting an electronic notification to a user associated with the virtual avatar. The electronic notification may inform the user of the changes that will be applied to their avatar.

Optionally, the user has the option to deny permission for the adjustments to their avatar, or to propose alternative adjustments.

In some embodiments, the adjustments to the visual parameter and/or the aural parameter of the virtual avatar may be applied automatically without informing any user(s) in the extended reality environment.

Optionally, the at least one visual setting and/or the at least one aural setting are specified by a user. The user may be associated with a virtual avatar in the extended reality environment, which is not necessarily the virtual avatar to which the adjustments are being made.

Optionally, the adjustments to the visual parameter and/or the aural parameter of the virtual avatar may only detectable by the user. Thus, in some embodiments, the adjustments may only be visible and/or audible to the user that has specified the applicable setting(s) of the extended reality environment.

Optionally, prior to adjusting the visual parameter and/or the aural parameter of the virtual avatar, the method comprises outputting an electronic notification to the user (i.e the user that has specified the at least one visual setting and/or the at least one aural setting). The electronic notification may inform the user of the changes that will be applied to the virtual avatar.

Optionally, the user has the option to deny permission for the adjustments, or to propose alternative adjustments.

According to a second aspect of the present disclosure, there is provided a computing device comprising a processor and memory, the memory communicatively coupled to the processor, the memory comprising instructions which, when executed by the processor, cause the processor to carry out the method of any embodiment or example of the first aspect of this disclosure.

Optionally, the computing device may be, but is not limited to, a gaming console, or a desktop PC, or a laptop, or a mobile phone, or a smart TV, or a server.

According to a third aspect of the present disclosure, there is provided a computer program comprising instructions which when executed in a computerized system comprising at least one processor, cause the at least one processor to carry out the method of any embodiment or example of the first aspect of this disclosure.

According to a fourth aspect of the present disclosure, there is provided a non-transitory computer-readable medium comprising instructions which, when executed by a computer, cause the computer to carry out the method of any embodiment or example of the first aspect of this disclosure.

### BRIEF DESCRIPTION OF THE DRAWINGS

Embodiments of this disclosure will be described hereinafter, by way of example only, with reference to the accompanying drawings in which like reference signs relate to like elements and in which:
**Figure 1** shows a flowchart illustrating a computer-implemented method according to an embodiment of this disclosure;
**Figure 2a** shows an example of a portion of an XR environment;
**Figure 2b** shows the portion of the XR environment in Figure 2a after implementing a method according to an embodiment of this disclosure;
**Figure 3** shows an example of a graphical user interface allowing a user to specify a permitted range of values for various virtual avatar parameters;
**Figure 4** shows a flowchart illustrating a computer-implemented method according to an embodiment of this disclosure for moderating an XR environment;
**Figure 5** is a schematic diagram illustrating a computing system that may be used in accordance with this disclosure; and
**Figure 6** is a block diagram of one example implementation of a computing device that may be used in accordance with this disclosure.

### DETAILED DESCRIPTION

Embodiments of this disclosure are described in the following with reference to the accompanying drawings.

The following detailed description is merely illustrative in nature and is not intended to limit the embodiments of the subject matter or the application and uses of such embodiments. As used herein, the words "exemplary" and "example" mean "serving as an example, instance, or illustration." Any implementation described herein as exemplary or an example is not necessarily to be construed as preferred or advantageous over other implementations. Furthermore, there is no intention to be bound by any expressed or implied theory presented in the preceding technical field, background, or the following detailed description. Features are not shown to scale in the drawings unless it is explicitly stated otherwise.

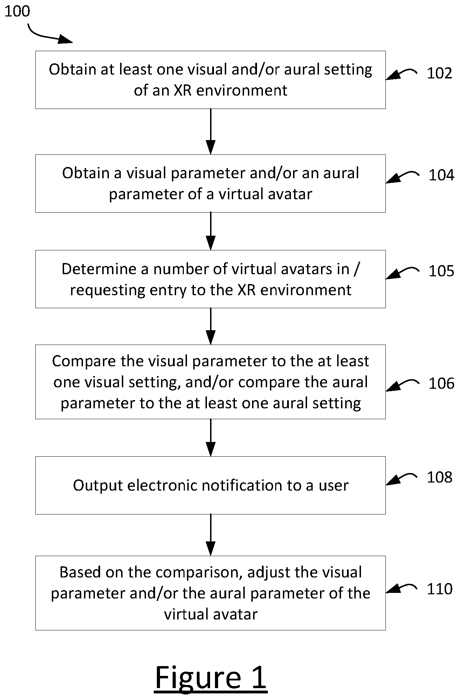

Figure 1 is a flowchart showing an embodiment of a computer-implemented method 100 according to the present disclosure. The method 100 relates to an extended reality (XR) environment configured to receive or support one or more virtual avatars. Each virtual avatar may be associated with a user (i.e. a real-world user or person). Each user may be associated with a computing device. It will be appreciated that multiple users may be associated with the same computing device.

The XR environment may be a virtual reality (VR) environment, or a mixed reality (MR) environment, or an augmented reality (AR) environment. In some embodiments, the XR environment may be a video game, or a metaverse, but it will be appreciated that the present disclosure is not limited to a particular type of XR environment.

At step 102, the method comprises obtaining at least one visual setting and/or at least one aural setting of the XR environment. In some embodiments, obtaining at least one visual setting and/or at least one aural setting of the XR environment comprises determining or measuring one or more visual and/or aural properties of the XR environment. Additionally or alternatively, obtaining at least one visual setting and/or at least one aural setting of the XR environment may comprise receiving or retrieving said at least one visual setting and/or at least one aural setting. In a non-limiting example, at step 102 at least one visual and/or aural setting of the XR environment is received from a user input, or retrieved from a storage means.

At step 104, the method comprises obtaining a visual parameter and/or an aural parameter of a virtual avatar. The virtual avatar is either within the XR environment or has requested entry to the XR environment. In some embodiments, step 104 comprises receiving or retrieving a user input defining the visual parameter and/or aural parameter of the virtual avatar. In some embodiments, step 104 comprises retrieving the visual parameter and/or aural parameter from a data file, cache, memory or other resource associated with said virtual avatar.

Optionally, the method then proceeds to step 105, wherein a number of virtual avatars within, and/or requesting entry to, the XR environment is determined. For example, the method may determine that ten virtual avatars need to be accommodated within the XR environment. It will be appreciated that any number of virtual avatars may be provided.

At step 106, the method comprises comparing the visual parameter of the virtual avatar to the at least one visual setting of the XR environment, and/or comparing the aural parameter of the virtual avatar to the at least one aural setting of the XR environment.

Optionally, the method then proceeds to step 108 wherein an electronic notification is output to a user. In some embodiments, the electronic notification is displayed on a computer device associated with the user, or the electronic notification may be virtually displayed to the user in the XR environment (e.g. using an XR head set). In some embodiments, the user is associated with the virtual avatar in question. In some embodiments, the user may be responsible for inputting or specifying the aural or visual setting of the XR environment. It will be appreciated that the user may be any user that is interacting with the XR environment.

The electronic notification 108 can be used as a warning, to notify the user that one or more adjustments will be made to the virtual avatar. The electronic notification 108 may seek permission from the user to make the suggested adjustments to the virtual avatar, based on the comparison in step 106.

In other embodiments, step 108 may be skipped, and the method can proceed from step 106 to step 110.

In step 110, the method comprises adjusting the visual parameter and/or the aural parameter of the virtual avatar, based on the comparison in step 106.

It will be appreciated that in step 110, based on the comparison, in some instances no adjustment may be required, such that the adjustment can be considered to be zero.

The adjustments may ensure that the virtual avatar conforms to the requirements or limitations of the XR environment. For example, the XR environment may have a muted colour tone. In comparison, the predefined parameters of a given virtual avatar may be such that the virtual avatar comprises a plurality of bright colours. In order to adapt the virtual avatar to the XR environment, step 106 may comprise adjusting the colours of the virtual avatar such that they are more muted.

In some embodiments the XR environment may be incapable of displaying the virtual avatar according to the predefined parameters.

In other embodiments, the XR environment may be capable of displaying the virtual avatar according to the predefined parameters, but doing so would result in a conflict between the virtual avatar and the XR environment. Taking the above example, the XR environment may be capable of generating the colours required for the virtual avatar, but doing so would result in a stark contrast between the rest of the XR environment and the virtual avatar that may reduce the immersivity and overall experience for the user(s) in the XR environment.

Optionally, the adjustment in step 110 may also be at least partially based on the number of virtual avatars determined in step 105 of the method. For example, the at least one virtual setting obtained in step 102 may include a size or dimension of the XR environment. The visual parameter of the virtual avatar in step 104 may include a size or dimension of the avatar (e.g. height, width, etc.). The method may determine in step 105 that ten virtual avatars need to be accommodated within the XR environment.

Optionally, step 105 may include obtaining or determining a visual parameter and/or an aural parameter of each virtual avatar within or requesting entry to the XR environment. In the above example this may include determining a size or dimension (e.g. height, width, etc.). of each of the ten virtual avatars

Thus, at step 110 the method may include adjusting the size or dimension of the virtual avatar to ensure that all ten of the virtual avatars will fit within the dimensions of the XR environment.

It will be appreciated that the present invention is not limited to adjusting the size or dimensions of the virtual avatar(s). One or more other visual and/or aural properties of the virtual avatar(s) may be adjusted to fit within the limitations of the XR environment.

In some embodiments, the adjustments made to the virtual avatar may improve accessibility of the XR environment. For example, the adjustments made may mitigate problems associated with sensory sensitivities, colour-blindness, visual impairments, etc.

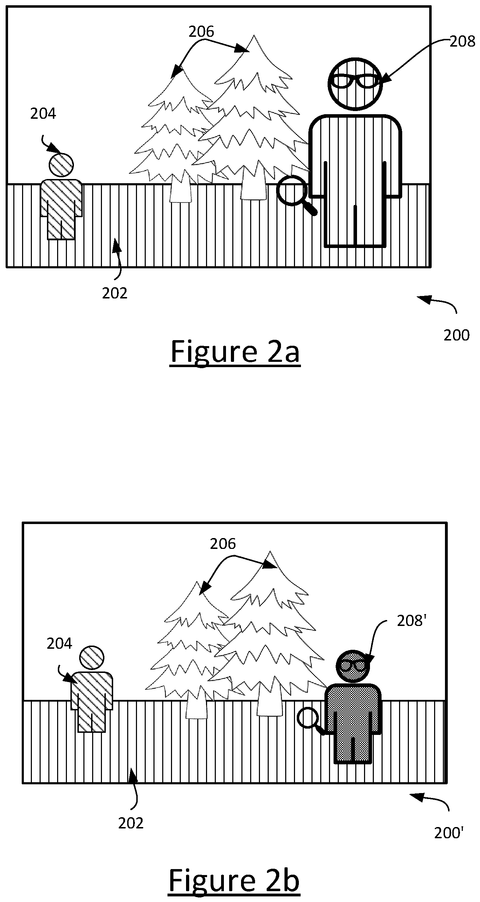

An example of the adjustment that may be made to the visual parameter and/or the aural parameter of the virtual avatar is described in more detail below in connection with Figures 2a and 2b.

Figure 2a shows a portion of an XR environment 200. It will be appreciated that this is a simplified example and in practice the XR environment is often more intricate and detailed. As shown in Figure 2a, the XR environment 200 includes a scene comprising a ground surface 202, a first virtual avatar 204, two trees 206 and a second virtual avatar 208. Optionally, the first virtual avatar 204 may be an NPC such that this digital character is not associated with a user.

In Figure 2a no adjustments have been made to the pre-set parameters of the first virtual avatar 204 or the second virtual avatar 208. Accordingly, the result is that the size (or dimensions) of the second virtual avatar 208 is out of proportion with the scale of the rest of the XR environment. This is apparent in Figure 2a as the second virtual avatar 208 is too large. In addition, there is a visual conflict between the second virtual avatar 208 and the background (or scenery) of the XR environment. As represented by the same patten fill in Figure 2a, the second virtual avatar 208 is the same or similar colour as the ground surface 202. Accordingly, it is difficult to clearly distinguish at least a portion of the second virtual avatar 208 from the ground surface 202.

The present disclosure provides a method for improving visual and/or aural representation of virtual avatars in an XR environment, which advantageously mitigates the problems described in connection with Figure 2a.

In Figure 2b, the computer-implemented method of the present disclosure, e.g., the method 100 in Figure 1, has been applied. In step 102, the method includes obtaining at least one visual setting of the XR environment, which in this embodiment includes at least one setting defining the scale or visual dimensions of the XR environment and at least one setting defining the colour range or colour scheme of the XR environment. Optionally, the at least one setting defining the scale or visual dimensions of the XR environment may define a size or scale range for virtual avatars or other characters with the environment The at least one visual setting of the XR environment may be used as a threshold or limit for virtual avatars entering the environment.

In step 104, the method comprises obtaining the pre-set parameters that define the first virtual avatar 204 and the second virtual avatar 208, which in this embodiment includes the size of the virtual avatar and the colour(s) of the virtual avatar.

In step 106, these pre-set parameters are compared to the at least one visual setting of the XR environment. In the embodiment shown in Figure 2b, the result of this comparison is that the size of the second virtual avatar 208 is identified as conflicting with the scale or size requirements of the XR environment. In addition, it is identified that there is an insufficient level of contrast between the colour of the second virtual avatar 208 and the background of the virtual environment.

In step 110, to remedy the conflicts identified by the comparison, the size or scale of the second virtual avatar 208 is decreased in line with (i.e., to conform with) the size or scale setting of the XR environment. In addition, the colour of the second virtual avatar 208 is changed such that a contrast level between the avatar and the background is increased. Optionally, the colour of the second virtual avatar 208 is adjusted to achieve a pre-set or minimum contrast level. Figure shows the avatar 208' following said changes.

Whilst Figures 2a and 2b are directed to the visual properties of the virtual avatar(s) and the XR environment, as these are inherently easier to explain using drawings, the present disclosure is equally directed to aural properties of the virtual avatar(s) and the XR environment. For example, if the pitch and/or volume of a virtual avatar is very similar to the pitch and/or volume of a background music track in the XR environment, then it may be difficult for users to clearly hear the virtual avatar. To mitigate this conflict, the pitch and/or volume of the virtual avatar is adjusted to increase contrast with the background music track. The pitch and/or volume may be adjusted to achieve a pre-set or minimum aural contrast level.

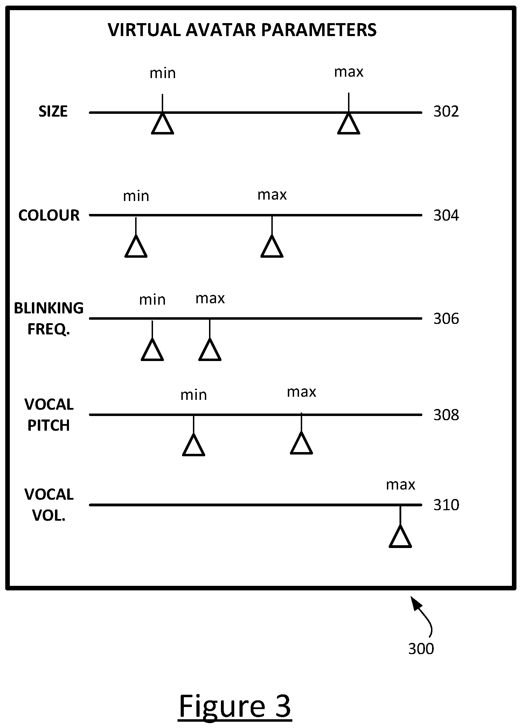

Figure 3 shows a graphical user interface (GUI) that may be displayed to a user to define the parameters of their virtual avatar. Optionally, a person may use the same virtual avatar across a range of different XR environments and platforms.

As shown in Figure 3, according to the present invention, the user may specify a range of permitted values for a number of visual or aural parameters of the virtual avatar. Each parameter is represented by one of the lines or bars in Figure 3. In this embodiment, there are five parameters for which the user can specify a range of permitted values: size 302; colour 304; blinking frequency 306; vocal pitch 308 and vocal volume 310. It will be appreciated that these parameters are not limiting. For simplicity only a single colour parameter is shown in Figure 3, but a number of different colours or colour ranges may be included for different portions of the virtual avatar (e.g. clothing, skin tone, etc.). This may include colour ranges for pre-set emotional responses of the virtual avatar.

In Figure 3, for each parameter the user can adjust a minimum and/or a maximum pointer on the slider to set the minimum and/or maximum permitted values for said parameter. For simplicity, no values are shown on the sliders in Figure 3. Optionally, for some parameters, only a minimum value or a maximum value may be specified by the user, as shown for the vocal volume in Figure 3. It will be appreciated that my setting a minimum or a maximum value the user is still defining a range of permitted values (e.g at least X, or less than Y).

In other embodiments, sliders may not be used. For example, the user may simply enter the numerical values for the minimum and/or maximum permitted values for a parameter.

Obtaining a user-specified range of permitted values for one or more visual and/or aural parameters of the virtual avatar means that, at step 110 of the method in Figure 1, said parameter can be adjusted within the user-specified range of permitted values. As such, the adjustments may vary for different avatars in the same XR environment, depending on the user-specified range of permitted values. This can allow the user to have some control over how their virtual avatar is adjusted to fit within the environment. As virtual avatars can be considered as a digital version of the user, this control can be important.

With regards to the possible visual and/or aural settings of the XR environment, which are not defined by the GUI in Figure 3, optionally the at least one visual setting one or more of the following: at least one colour, or colour range, or colour theme or background colour of the environment; a frame rate or refresh rate; a size, or a scale or a dimension. Optionally, the at least one aural setting of the extended reality environment comprises one or more of the following: a pitch, and/or volume and/or other aural property of a background music track; a maximum and/or a minimum avatar vocal volume; a maximum and/or a minimum avatar vocal pitch; a pitch, and/or volume and/or other aural property of one or more non-player characters. It will be appreciated that this list is not limiting.

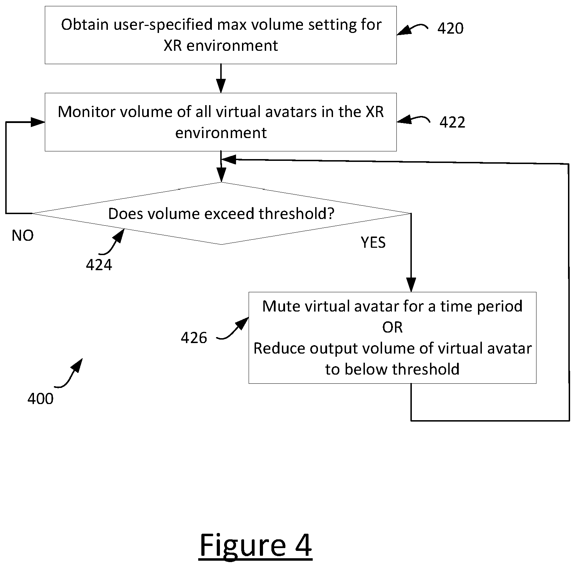

In addition to ensuring that a virtual avatar fits within the constraints of an XR environment, the method of the present disclosure may also be used to moderate avatar behaviour in an XR environment. An embodiment of such a method 400 is shown in Figure 4 of the drawings and is described below.

Whilst the standard user setting for an XR environment may allow the user to control the volume of any music or other sounds generated by an XR environment, the standard settings may not allow the user to control the volume of other virtual avatars or users. This is addressed by the method 400 of the present disclosure.

At step 420 the method includes obtaining a user-specified maximum volume setting for an XR environment. The maximum volume setting may be set by a user that has sensory sensitivity, or if a user wants a relaxing experience and does not want to hear loud arguments or other loud noises from other virtual avatars in the same environment. In some embodiments, the user may be a moderator or administrator for the XR environment.

At step 422, the method comprises monitoring the volume of all virtual avatars within the XR environment. Said monitoring may be ongoing or continuous for the duration that said user (that specified the setting) is within the XR environment.

Monitoring the volume of the virtual avatars includes, at step 424, determining whether a volume of a virtual avatar exceeds the maximum volume threshold. In some embodiments, the processor carrying out steps 420 and 424 may receive data obtained from each microphone associated with each virtual avatar in the XR environment.

If at step 424 an output volume associated with a virtual avatar is determined to exceed the maximum volume threshold, then the virtual avatar may be muted for a given period of time (step 426). This period of time may be specified by the user that specified the maximum volume setting. After the period of time has elapsed, the method may unmute the virtual avatar and re-check that the volume is now below the maximum volume threshold. If the virtual avatar (i.e. the user associated with the virtual avatar) is still exceeding the maximum volume setting then the virtual avatar is re-muted. Optionally, if a virtual avatar is muted twice within a given period of time then the duration of the mute may be increased (not shown in Figure 4).

Alternatively, at step 426 the volume of the virtual avatar may be reduced to below the maximum volume threshold, as opposed to muted entirely. In some embodiments, at step 426 the virtual avatar's sound output may be attenuated for a given period of time.

Optionally, if a virtual avatar is a repeat offender, such that they exceed the maximum volume setting a predetermined number of times within a given time period, then the virtual avatar may be removed and/or banned from the XR environment (not shown in Figure 4).

In some embodiments, the muting of the virtual avatar at step 426 may only be applied to sound output to the user that specified the maximum volume setting. This may be particularly applicable if the user specified setting is due to a personal preference or sensory requirement.

In some embodiments, the muting of the virtual avatar may be applied to each instance of the XR environment, such that the virtual avatar is muted for all virtual avatars (and users) that are in the XR environment. This may be particularly applicable if the threshold setting is applied by a moderator or administrator responsible for moderating virtual avatar behaviour in the XR environment.

The method shown in Figure 4 is not limited to volume, as alternative user-specified visual or aural settings may be obtained in step 420.

The method shown in Figure 1 or Figure 4 may additionally or alternatively be used to improve accessibility of XR environments. Many individuals have increased sensitivity to sensor stimuli, which can result in the need to avoid certain aural stimuli (such as high-pitched noises) or visual stimuli (such as bright colours). Thus, the one or more settings obtained for the XR environment may be user specified. The virtual avatar can then be adjusted in line with the user-specified setting(s) for the XR environment, to improve accessibility.

In an embodiment, a user having such sensory sensitivities can specify one or more aural and/or visual settings for the XR environment that would improve their experience of said environment. For example, if the user does not like noises above a certain pitch, the user could specify a suitable threshold pitch for the XR environment, which would apply to all sounds in the environment including all virtual avatars in said environment as well as any background noise, music, cut scenes, or NPC speech. As this requirement is particular to the user in question, in some embodiments this setting is only applied to sound output to said user. Thus, only the particular user's experience of the XR environment may be affected. This allows a user to control their own experience in the XR environment and adapt said environment to fit their needs without impacting other user's experience of the same environment. In other embodiments, the setting may be applied through the environment (i.e. to all current users).

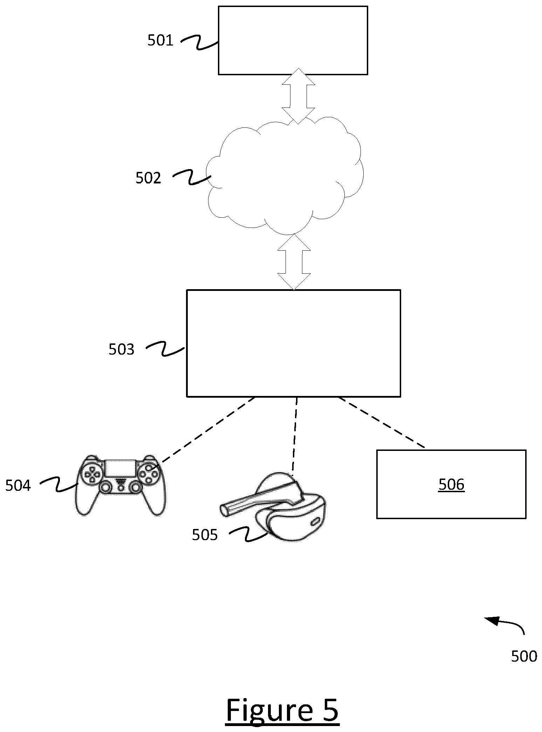

Figure 5 shows a schematic illustration of a computing system 500 that may be used to implement one or more methods of this disclosure. In Figure 5, the computing system 500 is shown as comprising a processing device 501, such as a cloud computing device or server, that is in communication with a client computing device (or computing device) 503 via a communications network 502. The computing system 500 may be a cloud gaming system.

The client computing device 503 may include, but is not limited to, a video game playing device (games console), a smart TV, a set-top box, a smartphone, laptop, personal computer (PC), USB-streaming device, etc. The client computing device 503 comprises, or is in communication with, at least one resource or device configured to obtain input data from the user. In this embodiment, the at least one resource comprises an extended reality display device 505, an input device or controller 504, and at least one sensor or camera 506. Optionally, only the extended reality display device 505 may be provided, or only the extended reality display device 505 and the input device or controller 504. Optionally, the at least one sensor or camera 506 may be integrated into the extended reality display device 505 or the input device or controller 504.

Information passes between the processing device 501 and the client computing device 503 in both directions, as illustrated in Figure 5.

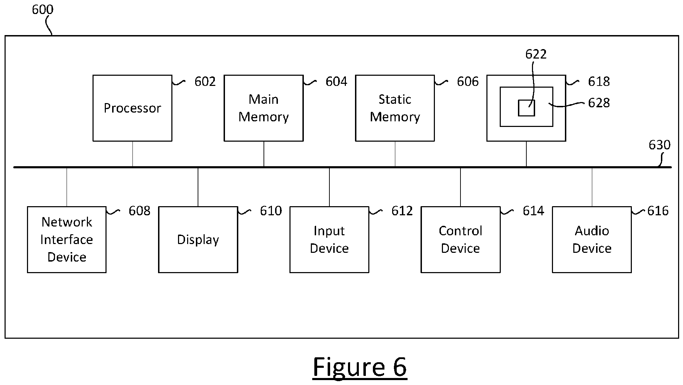

Figure 6 is a block diagram of one example implementation of a computing device 600 according to an embodiment of the present disclosure. The computing device 600 is associated with executable instructions for causing the computing device to perform any one or more of the methodologies discussed herein. In some implementations, the computing device 600 may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 600 includes a processing device 602, a main memory 604 (e.g., read-only memory (ROM), flash memory, dynamic random-access memory (DRAM) such as synchronous DRAM (SDRAM) or Rambus DRAM (RDRAM), etc.), a static memory 606 (e.g., flash memory, static random-access memory (SRAM), etc.), and a secondary memory (e.g., a data storage device 618), which communicate with each other via a bus 630.

Processing device 602 represents one or more general-purpose processors such as a microprocessor, central processing unit, or the like. More particularly, the processing device 602 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. Processing device 602 is configured to execute the processing logic (instructions 622) for performing the operations and steps discussed herein.

The computing device 600 may further include a network interface device 608. The computing device 600 also may include a video display unit 610 (e.g., a liquid crystal display (LCD) or a cathode ray tube (CRT)), an alphanumeric input device 612 (e.g., a keyboard or touchscreen), a cursor control device 614 (e.g., a mouse or touchscreen), and an audio device 616 (e.g., a speaker).

The data storage device 618 may include one or more machine-readable storage media (or more specifically one or more non-transitory computer-readable storage media) 628 on which is stored one or more sets of instructions 622 embodying any one or more of the methodologies or functions described herein. The instructions 622 may also reside, completely or at least partially, within the main memory 604 and/or within the processing device 602 during execution thereof by the computer system 600, the main memory 604 and the processing device 602 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid-state memory, magnetic tape, a removable computer diskette, a random-access memory (RAM), a read-only memory (ROM), a rigid magnetic disc, and an optical disk, such as a CD-ROM, CD-R/W or DVD.

In an implementation, the modules, components and other features described herein can be implemented as discrete components or integrated in the functionality of hardware components such as ASICS, FPGAs, DSPs or similar devices.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilising terms such as "providing", "calculating", "computing," "identifying", "detecting ", "establishing" , "training", "determining", "storing", "generating" ,"checking", "obtaining" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Accordingly, there has been described a computer-implemented method, comprising obtaining at least one visual setting and/or at least one aural setting of an extended reality environment, obtaining a visual parameter and/or an aural parameter of a virtual avatar, wherein the virtual avatar is within the extended reality environment or has requested entry to the extended reality environment, comparing the visual parameter of the virtual avatar to the at least one visual setting of the extended reality environment, and/or comparing the aural parameter of the virtual avatar to the at least one aural setting of the extended reality environment, and based on the comparison, adjusting the visual parameter and/or the aural parameter of the virtual avatar. The virtual avatar may be adjusted within a user-specified range of permitted values for the parameter.

Further embodiments or aspects of the present disclosure are described in the following numbered clauses:
1. A computer-implemented method, comprising: obtaining at least one visual setting and/or at least one aural setting of an extended reality environment; obtaining a visual parameter and/or an aural parameter of a virtual avatar, wherein the virtual avatar is within the extended reality environment or has requested entry to the extended reality environment; comparing the visual parameter of the virtual avatar to the at least one visual setting of the extended reality environment, and/or comparing the aural parameter of the virtual avatar to the at least one aural setting of the extended reality environment; and based on the comparison, adjusting the visual parameter and/or the aural parameter of the virtual avatar.
2. The computer-implemented method of clause 1, wherein adjusting the visual parameter and/or the aural parameter of the virtual avatar comprises: managing potential visual and/or aural conflict between the virtual avatar and the extended reality environment by adjusting the visual parameter and/or the aural parameter accordingly.
3. The computer-implemented method of clause 1 or clause 2, wherein adjusting the visual parameter and/or the aural parameter of the virtual avatar comprises: managing or optimising a level of contrast between the extended reality environment and the virtual avatar by adjusting the visual parameter and/or the aural parameter accordingly.
4. The computer-implemented method of any preceding clause, further comprising: determining a number of virtual avatars within the extended reality environment and/or a number of virtual avatars that have requested entry to the extended reality environment; wherein adjusting the visual parameter and/or the aural parameter of the virtual avatar is at least partially based on the determined number of virtual avatars.
5. The computer-implemented method of any preceding clause, further comprising: obtaining a visual parameter and/or an aural parameter of at least one other virtual avatar, wherein the at least one other virtual avatar is within the extended reality environment or has requested entry to the extended reality environment; wherein adjusting the visual parameter and/or the aural parameter of the virtual avatar is at least partially based on the visual parameter and/or an aural parameter of the at least one other virtual avatar.
6. The computer-implemented method of any preceding clause, wherein adjusting the visual parameter and/or the aural parameter of the virtual avatar comprises: conforming the virtual avatar to one or more constraints of the extended reality environment, wherein the one or more constraints are defined by the at least one visual and/or aural setting.
7. The computer-implemented method of any preceding clause, wherein obtaining the visual parameter comprises obtaining a specified range of permitted values for the visual parameter and/or obtaining the aural parameter comprises obtaining a specified range of permitted values for the aural parameter.
8. The computer-implemented method of clause 7, wherein adjusting the visual parameter and/or the aural parameter of the virtual avatar comprises adjusting the visual parameter and/or the aural parameter of the virtual avatar within the specified range of permitted values.
9. The computer-implemented method of clause 7 or clause 8, wherein the specified range of permitted values is a user-specified range of permitted values.
10. The computer-implemented method of any preceding claim, wherein the at least one visual setting of the extended reality environment comprises one or more of the following: at least one colour, or colour range, or colour theme or background colour of the environment; a frame rate or refresh rate; a size, or a scale or a dimension.
11. The computer-implemented method of any preceding clause, wherein the at least one aural setting of the extended reality environment comprises one or more of the following: a pitch, and/or volume and/or other aural property of a background music track; a maximum and/or a minimum avatar vocal volume; a maximum and/or a minimum avatar vocal pitch; a pitch, and/or volume and/or other aural property of one or more non-player characters.
12. The computer-implemented method of any preceding clause, wherein the visual parameter of the virtual avatar comprises any one or more of: a size, or a scale or a dimension of the virtual avatar; a colour; a blinking frequency; a pre-set visual emotional response.
13. The computer-implemented method of any preceding clause, wherein the aural parameter of the virtual avatar comprises any one or more of: vocal pitch; vocal volume; a pre-set aural emotional response.
14. The computer-implemented method of any preceding clause, wherein the at least one aural setting of the extended reality environment comprises a maximum volume setting and the aural parameter of the virtual avatar includes a vocal volume of the virtual avatar, wherein in response to the vocal volume of the virtual avatar exceeding the maximum volume setting of the extended reality environment, adjusting the aural parameter comprises: reducing the vocal volume of the virtual avatar to below the maximum volume setting; or muting the virtual avatar for a given time period.
15. The computer-implemented method of any preceding clause, wherein the adjustment to the visual parameter and/or the aural parameter of the virtual avatar is applied to each instance of the extended reality environment.
16. The computer-implemented method of any preceding clause, wherein prior to adjusting the visual parameter and/or the aural parameter of the virtual avatar, the method comprises outputting an electronic notification to a user associated with the virtual avatar.
17. The computer-implemented method of any one of clauses 1 to 14, wherein the at least one visual setting and/or the at least one aural setting are specified by a user, and wherein the adjustments to the visual parameter and/or the aural parameter of the virtual avatar are only detectable by the user.
18. The computer-implemented method of clause 17, wherein prior to adjusting the visual parameter and/or the aural parameter of the virtual avatar, the method comprises outputting an electronic notification to the user.
19. A computing device comprising: a processor; and memory, the memory communicatively coupled to the processor, the memory comprising instructions which, when executed by the processor, cause the processor to carry out the method of any preceding claim.
20. A computer program comprising instructions which when executed in a computerized system comprising at least one processor, cause the at least one processor to carry out the method of any one of clauses 1 to 18.
21. A non-transitory computer-readable medium comprising instructions which, when executed by a computer, cause the computer to carry out the method of any one of clauses 1 to 18.

Although particular embodiments of this disclosure have been described, it will be appreciated that many modifications/additions and/or substitutions may be made within the scope of the claims.

It is to be understood that the above description is intended to be illustrative, and not restrictive. Many other implementations will be apparent to those of skill in the art upon reading and understanding the above description. Although the disclosure has been described with reference to specific example implementations, it will be recognised that the disclosure is not limited to the implementations described but can be practiced with modification and alteration within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method, comprising:
obtaining at least one visual setting and/or at least one aural setting of an extended reality environment;
obtaining a visual parameter and/or an aural parameter of a virtual avatar, wherein the virtual avatar is within the extended reality environment or has requested entry to the extended reality environment;
comparing the visual parameter of the virtual avatar to the at least one visual setting of the extended reality environment, and/or comparing the aural parameter of the virtual avatar to the at least one aural setting of the extended reality environment; and
based on the comparison, adjusting the visual parameter and/or the aural parameter of the virtual avatar.

2. The computer-implemented method of claim 1, wherein adjusting the visual parameter and/or the aural parameter of the virtual avatar comprises:
optimising a level of contrast between the extended reality environment and the virtual avatar by adjusting the visual parameter and/or the aural parameter accordingly; and/or
conforming the virtual avatar to one or more constraints of the extended reality environment, wherein the one or more constraints are defined by the at least one visual and/or aural setting.

3. The computer-implemented method of any preceding claim, further comprising:
determining a number of virtual avatars within the extended reality environment and/or a number of virtual avatars that have requested entry to the extended reality environment;
wherein adjusting the visual parameter and/or the aural parameter of the virtual avatar is at least partially based on the determined number of virtual avatars.

4. The computer-implemented method of any preceding claim, further comprising:
obtaining a visual parameter and/or an aural parameter of at least one other virtual avatar, wherein the at least one other virtual avatar is within the extended reality environment or has requested entry to the extended reality environment;
wherein adjusting the visual parameter and/or the aural parameter of the virtual avatar is at least partially based on the visual parameter and/or an aural parameter of the at least one other virtual avatar.

5. The computer-implemented method of any preceding claim, wherein:
obtaining the visual parameter comprises obtaining a specified range of permitted values for the visual parameter and/or obtaining the aural parameter comprises obtaining a specified range of permitted values for the aural parameter; and
adjusting the visual parameter and/or the aural parameter of the virtual avatar comprises adjusting the visual parameter and/or the aural parameter of the virtual avatar within the specified range of permitted values.

6. The computer-implemented method of claim 5, wherein the specified range of permitted values is a user-specified range of permitted values.

7. The computer-implemented method of any preceding claim, wherein the at least one visual setting of the extended reality environment comprises one or more of the following:
at least one colour, or colour range, or colour theme or background colour of the environment;
a frame rate or refresh rate;
a size, or a scale or a dimension.

8. The computer-implemented method of any preceding claim, wherein the at least one aural setting of the extended reality environment comprises one or more of the following:
a pitch, and/or volume and/or other aural property of a background music track;
a maximum and/or a minimum avatar vocal volume;
a maximum and/or a minimum avatar vocal pitch;
a pitch, and/or volume and/or other aural property of one or more non-player characters.

9. The computer-implemented method of any preceding claim, wherein the visual parameter of the virtual avatar comprises any one or more of:
a size, or a scale or a dimension of the virtual avatar;
a colour;
a blinking frequency;
a pre-set visual emotional response.

10. The computer-implemented method of any preceding claim, wherein the aural parameter of the virtual avatar comprises any one or more of:
vocal pitch;
vocal volume;
a pre-set aural emotional response.

11. The computer-implemented method of any preceding claim, wherein the at least one aural setting of the extended reality environment comprises a maximum volume setting and the aural parameter of the virtual avatar includes a vocal volume of the virtual avatar, wherein in response to the vocal volume of the virtual avatar exceeding the maximum volume setting of the extended reality environment, adjusting the aural parameter comprises:
reducing the vocal volume of the virtual avatar to below the maximum volume setting; or
muting the virtual avatar for a given time period.

12. The computer-implemented method of any preceding claim, wherein the adjustment to the visual parameter and/or the aural parameter of the virtual avatar is applied to each instance of the extended reality environment.

13. The computer-implemented method of any one of claims 1 to 11, wherein the at least one visual setting and/or the at least one aural setting are specified by a user, and wherein the adjustments to the visual parameter and/or the aural parameter of the virtual avatar are only detectable by the user.

14. A computing device comprising:
a processor; and
memory, the memory communicatively coupled to the processor, the memory comprising instructions which, when executed by the processor, cause the processor to carry out the method of any preceding claim.

15. A non-transitory computer-readable medium comprising instructions which, when executed by a computer, cause the computer to carry out the method of any one of claims 1 to 13.

## Amended claims

### Amended claims in accordance with Rule 137(2) EPC.

1. A computer-implemented method, comprising:
obtaining (102) at least one visual setting and/or at least one aural setting of an extended reality environment;
obtaining (104) a visual parameter and/or an aural parameter of a virtual avatar (204, 208), wherein the virtual avatar is within the extended reality environment or has requested entry to the extended reality environment;
comparing (106) the visual parameter of the virtual avatar to the at least one visual setting of the extended reality environment, and/or comparing the aural parameter of the virtual avatar to the at least one aural setting of the extended reality environment; and
based on the comparison, adjusting (110) the visual parameter and/or the aural parameter of the virtual avatar.

2. The computer-implemented method of claim 1, wherein adjusting the visual parameter and/or the aural parameter of the virtual avatar comprises:
optimising a level of contrast between the extended reality environment and the virtual avatar by adjusting the visual parameter and/or the aural parameter accordingly; and/or
conforming the virtual avatar to one or more constraints of the extended reality environment, wherein the one or more constraints are defined by the at least one visual and/or aural setting.

3. The computer-implemented method of any preceding claim, further comprising:
determining (105) a number of virtual avatars within the extended reality environment and/or a number of virtual avatars that have requested entry to the extended reality environment;
wherein adjusting the visual parameter and/or the aural parameter of the virtual avatar is at least partially based on the determined number of virtual avatars.

4. The computer-implemented method of any preceding claim, further comprising:
obtaining a visual parameter and/or an aural parameter of at least one other virtual avatar, wherein the at least one other virtual avatar is within the extended reality environment or has requested entry to the extended reality environment;
wherein adjusting the visual parameter and/or the aural parameter of the virtual avatar is at least partially based on the visual parameter and/or an aural parameter of the at least one other virtual avatar.

5. The computer-implemented method of any preceding claim, wherein:
obtaining the visual parameter comprises obtaining a specified range of permitted values for the visual parameter and/or obtaining the aural parameter comprises obtaining a specified range of permitted values for the aural parameter; and
adjusting the visual parameter and/or the aural parameter of the virtual avatar comprises adjusting the visual parameter and/or the aural parameter of the virtual avatar within the specified range of permitted values.

6. The computer-implemented method of claim 5, wherein the specified range of permitted values is a user-specified range of permitted values.

7. The computer-implemented method of any preceding claim, wherein the at least one visual setting of the extended reality environment comprises one or more of the following:
at least one colour, or colour range, or colour theme or background colour of the environment;
a frame rate or refresh rate;
a size, or a scale or a dimension.

8. The computer-implemented method of any preceding claim, wherein the at least one aural setting of the extended reality environment comprises one or more of the following:
a pitch, and/or volume and/or other aural property of a background music track;
a maximum and/or a minimum avatar vocal volume;
a maximum and/or a minimum avatar vocal pitch;
a pitch, and/or volume and/or other aural property of one or more non-player characters.

9. The computer-implemented method of any preceding claim, wherein the visual parameter of the virtual avatar comprises any one or more of:
a size, or a scale or a dimension of the virtual avatar;
a colour;
a blinking frequency;
a pre-set visual emotional response.

10. The computer-implemented method of any preceding claim, wherein the aural parameter of the virtual avatar comprises any one or more of:
vocal pitch;
vocal volume;
a pre-set aural emotional response.

11. The computer-implemented method of any preceding claim, wherein the at least one aural setting of the extended reality environment comprises a maximum volume setting and the aural parameter of the virtual avatar includes a vocal volume of the virtual avatar, wherein in response to the vocal volume of the virtual avatar exceeding the maximum volume setting of the extended reality environment, adjusting the aural parameter comprises:
reducing the vocal volume of the virtual avatar to below the maximum volume setting; or
muting the virtual avatar for a given time period.

12. The computer-implemented method of any preceding claim, wherein the adjustment to the visual parameter and/or the aural parameter of the virtual avatar is detectable by all users in the extended reality environment.

13. The computer-implemented method of any one of claims 1 to 11, wherein the at least one visual setting and/or the at least one aural setting are specified by a user, and wherein the adjustments to the visual parameter and/or the aural parameter of the virtual avatar are only detectable by the user.

14. A computing device comprising:
a processor (602); and
memory (604), the memory communicatively coupled to the processor, the memory comprising instructions which, when executed by the processor, cause the processor to carry out the method of any preceding claim.

15. A non-transitory computer-readable medium (628) comprising instructions which, when executed by a computer, cause the computer to carry out the method of any one of claims 1 to 13.
